Europäisches Patentamt

European Patent Office

Office européen des brevets

(11) Publication number: **0 104 271**
**B1**

# EUROPEAN PATENT SPECIFICATION

(45) Date of publication of patent specification: **13.08.86**

(51) Int. Cl.⁴: **E 04 B 7/02, E 04 C 3/09**

(21) Application number: **82108982.8**

(22) Date of filing: **28.09.82**

(54) **Building cladding construction.**

(43) Date of publication of application:
**04.04.84 Bulletin 84/14**

(45) Publication of the grant of the patent:
**13.08.86 Bulletin 86/33**

(84) Designated Contracting States:
**BE DE FR GB NL**

(56) References cited:
**DE-B-2 837 153**
**GB-A-1 294 755**
**GB-A-1 318 255**
**GB-A-1 423 359**
**GB-A-1 531 462**

(73) Proprietor: **WARD BROTHERS (SHERBURN) LIMITED**
**Widespan Works Sherburn**
**Malton North Yorkshire YO17 8PQ (GB)**

(72) Inventor: **Frederiksen, Anton Robert**
**70 Ryedale Close Norton**
**Malton North Yorkshire Y017 9DQ (GB)**
Inventor: **Wallis, Malcolm Robert**
**'High Noon' West End Kilham**
**Nr. Driffield East Yorkshire (GB)**

(74) Representative: **Leach, John Nigel et al**
**FORRESTER & BOEHMERT Widenmayerstrasse 4/I**
**D-8000 München 22 (DE)**

Courier Press, Leamington Spa, England.

## Description

This invention relates to a building cladding construction and to a restraint tie for use therein and is particularly concerned with building cladding constructions of the type in which a plurality of generally parallel structural members are supported in parallel spaced relation by elongate support members. The support members may comprise vertical columns of a frame of the building construction and the structural members, rails on which wall cladding panels are mounted to provide walls.

In another arrangement, the support members may comprise the principles of a roof and the structural members, roof purlins supported on the principles on which purlins, cladding roof panels are mounted.

Particularly in metal framed buildings, it is conventional practice to interconnect horizontal cladding rails in a wall, or purlins in a roof structure, to maintain the rails or purlins parallel with one another respectively, by means of restraint ties. This is of particular importance in high wind conditions, because unless the structural members of the cladding construction are adequately restrained, the pressures imposed by the wind creating a reduced pressure behind the wall or roof panels can produce lifting of the panels and hence of the structural members to which the panels are secured. This can cause buckling of the structural members intermediate their ends as the lower edges of the structural members are placed in compression, and the upper edges are stressed.

Known restraint ties, such as the restraint ties described in Metal Trim U.K. Patent 1,115,425, suffer from the disadvantage that they provide little or no stability against rotation of the structural members and little or no restraint against buckling of the structural members in high wind conditions when the ties are engaged.

Objects of the invention are to provide a building cladding construction and a restraint tie for use therein which extends between parallel structural members of the construction, whereby stability against rotation of the structural members is provided.

According to one aspect of the present invention we provide a building cladding construction including a plurality of spaced apart elongate support members, a plurality of elongate structural members each having a longitudinal axis, supported by the support members in side-by-side parallel, spaced relation and extending transversely of the support members to span the spaces between adjacent support members, and at least one restraint tie associated therewith, and extending between each pair of adjacent structural members, the or each tie comprising an elongated body having a longitudinal axis, a web, and an outwardly extending limb at each longitudinal edge of the web, each end part of the body having first and second pairs of abutments, the abutments of each pair being spaced apart longitudinally of said axis of the restraint tie, the abutments comprising the edges of slots formed in said limbs and/or the web, each of the structural members of said pair of structural members having at least one aperture therein, the abutments of said first and second pairs of abutments of each end part engaging opposite faces of a wall of the associated structural member around said aperture wherein the or each aperture receives one of said end parts of the restraint tie with the web of the restraint tie extending transversely of the longitudinal axis of the structural member, so that the abutments of the first pair are spaced apart from the abutments of the second pair in a direction transverse to the longitudinal axes of the structural members, with at least one pair of abutments being spaced from the longitudinal axis of the structural member in a direction towards the nearest support member so that each of the structural members are restrained against rotation about an axis coincident with or parallel to the longitudinal axis thereof, and the adjacent structural members are held in parallel relation.

It has been found, surprisingly, that because of this arrangement of abutments, and particularly because the web of the tie is transverse to, and at least one abutment of each pair is spaced from, a direction towards the support members, the longitudinal axes of the structural members in the resulting cladding construction, the structural members are not only restrained against rotation about their longitudinal axes more effectively than has been achieved with known restraint ties, but also the resistance to buckling of the structural members due to lifting in high wind conditions, is considerably enhanced. Thus a cladding construction of superior strength is provided.

At least some end parts of some restraining ties may have a resilient means associated therewith to retain said abutments in engagement with said faces of the structural member. The end parts of two restraint ties may be engaged within one aperture of one of said pairs of structural members, the restraint ties extending from the aperture in opposite directions, one of the ties restraining the other of said pair of structural members, whilst the other of said two ties extends to and restrains a further structural member. Each end part received in said aperture may have a resilient means associated therewith, the resilient means mutually abutting to urge the end parts towards a respective side of the aperture to cause said wall surrounding the aperture to be maintained in engagement with said abutments.

Alternatively, only one of the end parts received in said aperture may have associated therewith a resilient means, the resilient means abutting the other end part to urge each of the end parts towards a respective side of the aperture to cause said wall surrounding the aperture to be retained in engagement with said abutments.

The body of the or each restraint tie may comprise a generally channel section member having a pair of spaced parallel limbs interconnected by and extending in common directions from the web.

In a first embodiment, the abutments may be provided by the edges of slots formed in each of said limbs and the aperture may be of rectangular configuration. Thus, the abutments provided by the edges of the slots may overly a portion of the wall adjacent said aperture. In this embodiment, the limbs may decrease in height towards the free end of the body from a maximum height adjacent to, but spaced towards the free end of, said slot.

In a second embodiment, said abutments may be provided by the edges of slots formed in the web of the channel, said limbs terminating in alignment with the edge of the slot furthest from the free end. The aperture may be of cruciform configuration in this case to permit of the end part being inserted into the aperture when aligned with a horizontal part of the cruciform cross-section of maximum dimension, and to permit said slots to engage opposite surfaces of the wall around the part of the slot of minimum horizontal dimension when the end part is displaced towards said part from said part of maximum horizontal cross-sectional dimension.

The width of the web may decrease towards the end part from a maximum at the edge of said slot closest to the end part. In this embodiment, said aperture may be circular to permit of said end part being introduced into the aperture and for opposed surfaces of the wall around the aperture to engage in said slots and to engage said abutments when the end part is moved from said diametric position so as to extend chordally of the slot.

In a third embodiment, the body of the or each restraint tie comprises a web and opposite ends thereof oppositely directed flanges so as to provide a generally S or Z shape. In this embodiment, each structural member is provided with at least two apertures, an end part of a single restraint tie being engaged in each aperture.

The abutment surfaces may be provided by slots formed in said limbs and the apertures in the structural members may be of generally rectangular configuration so as to permit of the end part to be engaged within the aperture by orientating the end part so that the web lies generally parallel to the longer sides of the rectangle, and thereafter the end part is rotated about the longitudinal axis of the restraint tie so as to cause portions of the wall around said aperture to engage within the slots so that oppositely directed surfaces of said wall parts abut the edges of the slots which provide said abutments.

The flanges may decrease in height towards the free end of the end part from a maximum height at said slot.

The invention will now be described in more detail by way of example, with reference to the accompanying drawings, wherein:—

FIGURE 1 is an elevation, partly broken away, of part of a roof structure of a building construction embodying the invention:

FIGURE 2 is a perspective view showing the interconnection of two restraint ties and purlins in Figure 1;

FIGURE 3 is a fragmentary cross-sectional view on the line 3—3 of Figure 2;

FIGURE 4 is a fragmentary side elevation of the purlin of Figure 2;

FIGURE 5 is a side view of an end part of the one of the restraint ties of Figures 2 and 3;

FIGURES 6—9; 10—13 and 14—17 are similar views to those of Figures 2—5 but showing, respectively, three further embodiments; and

FIGURE 18 is a cross-sectional view through a still further embodiment.

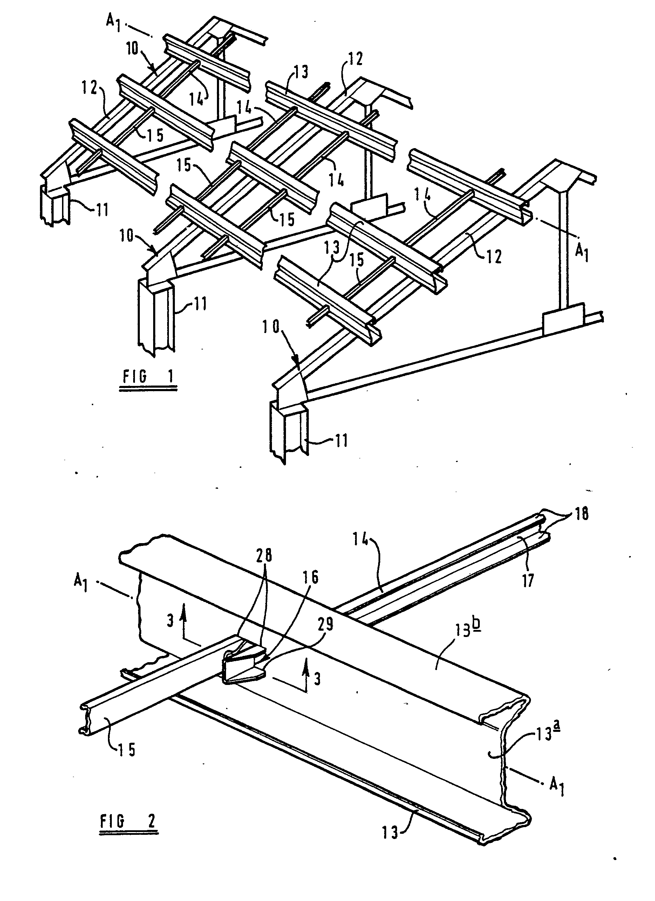

Referring now to Figure 1, a roof structure of a building construction comprises three roof trusses each indicated generally at 10 supported by vertical column supports 11. The trusses provide roof principals 12 on which rest structural members comprising purlins, some of which are shown at 13, the purlins 13 each being in the form of cold-rolled steel joists of sigma section. The purlins 13 are interconnected by restraint ties 14, 15 which serve both to support the purlins 13 so that adjacent purlins 13 are parallel along their length between adjacent roof principles 12, which provide support members 12, and also, as hereinafter to be described, to prevent rotation of the purlins 13 about their longitudinal axes one of which is indicated at $A_1$ and buckling of the purlins 13, intermediate their ends.

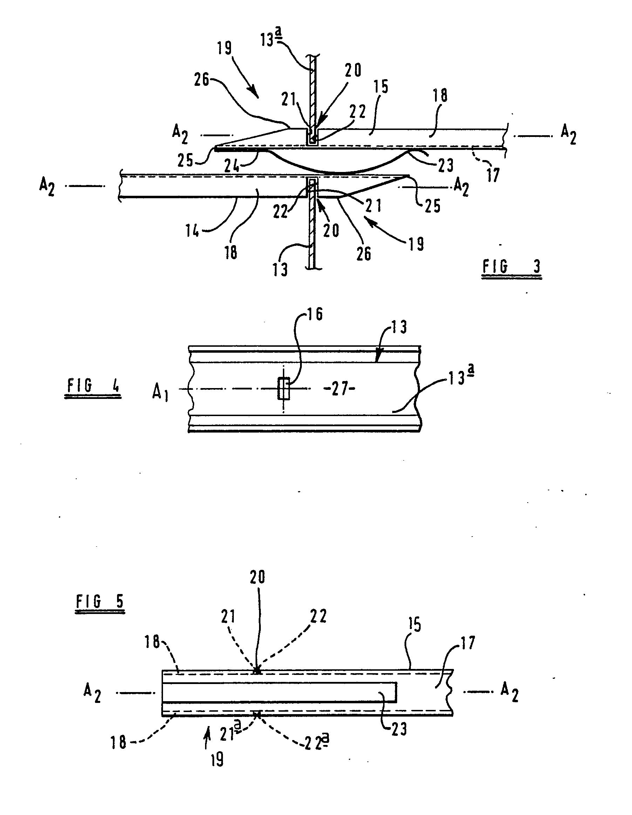

In Figure 1, the interconnection of the restraint members 14, 15 and purlins 13 is illustrated diagrammatically but is shown in more detail in Figures 2—5 which are now referred to.

Each purlin 13 is provided in a web 13a thereof, with an aperture 16 at the locations to where it is desired to connect the restraint ties 14, 15. Each aperture 16 is of rectangular configuration having its major axis vertical.

Each restraint tie 14, 15 is of channel configuration comprising a web part 17 interconnecting parallel spaced limbs 18 which extend in common directions from the web 17. An end part 19 of each restraint tie 14, 15 is provided with a narrow rectangular slot 20 in each limb 17, the edges of one slot 20 providing a first pair of abutments 21, 22, which are spaced apart longitudinally of the longitudinal axis $A_2$ of the restraint tie and the edges of the other slot 20 providing a second pair of abutments 21a, 22a, similarly spaced apart longitudinally and spaced laterally of the axis $A_2$ from the first pair 21, 22.

One of the restraint ties, in the present example the restraint tie 15, is provided with a resilient biasing means in the form of a leaf spring 23 fixed at one end 24 to the end part of the restraint tie.

The limbs 18 reduce in height towards the free end 25 of their associated restraint tie 14, 15 from a position 26 adjacent to but spaced from the slots 20 towards the free end 25.

In use, a restraint tie 15 is introduced into the aperture 16 until the part of the wall 27 of the web 17 surrounding the aperture 16 is aligned with the slots 20 and the wall part 27 is then caused to enter the slots 20 so that the abutment surfaces 21, 22 engage oppositely facing surfaces of the wall part 27.

A second restraint tie 14 is then introduced into the aperture 16 from the opposite side and is forced by the leaf spring 23 against the opposite side of the aperture 16 in engagement with the restraint tie 15 until the wall part 27 becomes aligned with the slots 20 in the restraint tie 14, whereupon the wall part 27 is caused to enter the slots 20 so that again the abutments 21, 22 engage oppositely facing surfaces of the wall part 27.

The abutments 21, 22 are retained in engagement with their associated surfaces of the wall 27 by means of the leaf spring 23.

It will be seen that the abutments 21, 22 of said one pair engage the wall part 27 at positions which are spaced laterally relative to the axis $A_1$ from the abutments 21a, 22a of said second pair, as indicated at 28, 29 in Figure 2. More importantly, an abutment of each pair 21, 22 is spaced from the axis A in a direction towards the, in use, lower edge of the purlin 13, i.e. towards the support members 12.

Because of the engagement of opposite surfaces of the wall part 27 of the purlin 13 by abutments 21, 22 at positions which are spaced transversely relative to the axis $A_1$, considerable resistance to rotation of the purlin 13 about the axis $A_1$ or any axis parallel thereto, is achieved. This is particularly important before cladding panels are affixed and this is an important advantage of the invention compared with previously known systems which do not give adequate stability to the structural members before cladding.

Furthermore, because at least one abutment of each pair engages the wall 27, as indicated at 29, i.e. spaced from axis $A_1$ towards the support members 10, considerable resistance to buckling and bending of the purlin 13 is achieved, which is particularly important after cladding panels are affixed, when winds can produce reduced pressure behind the panels which causes lifting of the panels and hence the purlins to which the panels are affixed which results in the lower edges of the purlins 13 being placed in compression. This is an important advantage of the present invention over known systems which do not provide adequate restraint against buckling of the purlins.

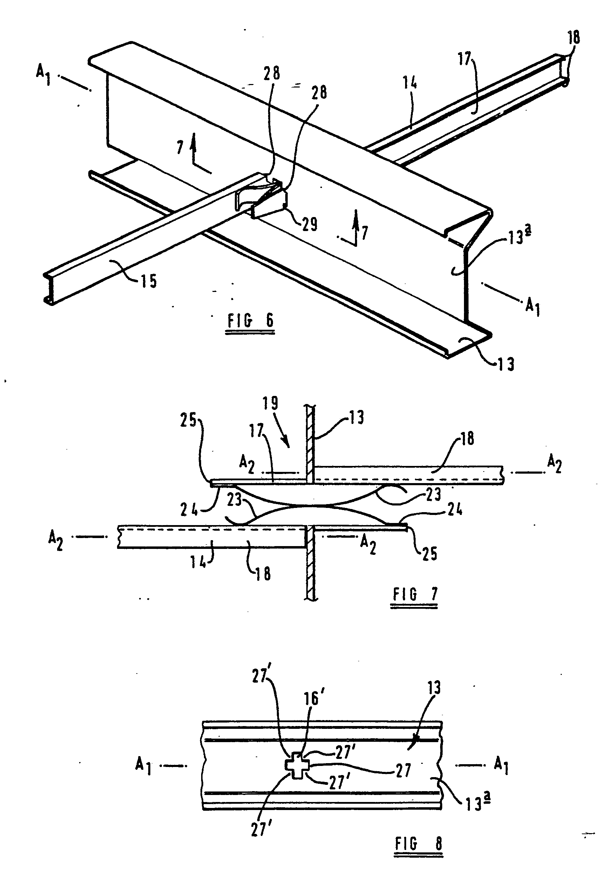

Referring now to Figures 6 to 9, the same reference numerals have been used to refer to parts corresponding to those illustrated in Figures 2—5 and the arrangement is generally similar to that illustrated in Figures 2—5 except as follows. As shown in Figure 8, the aperture 16' is of cruciform configuration.

The end part 19 of each restraint tie 14, 15 differs from the restraint ties 14 and 15 of the first embodiment in that the slots 20' extend into the web part 17 of the ties 14, 15 and the limbs 18 terminate at the edge of the slot 20', the ends 22 of the limbs 18 providing abutments. The web part 17 reduces in width towards the free end 25 from a maximum at the edge of the slot 20' providing the abutment 21.

In this embodiment both restraint ties 14 and 15 are provided with resilient biasing means comprising a leaf spring 23.

In use, one of the restraint ties 14, 15 is introduced into the aperture 16' with the un-limbed portion of the end part 19 in alignment with the part of the aperture 16' which is of maximum dimension in a direction transverse to the longitudinal axis $A_1$. As a result of engagement of the leaf spring 23 with one edge of the aperture 16' when the slots 20' become aligned with the wall part 27 surrounding the aperture 16', the portions 27' enter the slots 20'. The other restraint tie 15, 14 respectively is then introduced into the aperture 16' from the opposite direction and a similar procedure is followed so that, as shown in Figure 6, the slots 20' of both restraint ties 14, 15 have received therein portions 27' of the wall part 27 surrounding the aperture 16' so that the abutments 21, 22 engage oppositely facing surfaces of the wall part 27. As in the case of the first embodiment, the abutments 21, 22 of each pair engage the wall part 27 at positions 28, 29 spaced transversely of the axis $A_1$ with at least the abutments which engage at 29 spaced from axis $A_1$ towards the support member on which the purlins 13 are supported. Thus again, the ties 14, 15 restrain rotation of the purlin 13 about the axis $A_1$ or an axis parallel thereto and reduce the risk of buckling of purlin 13 in high wind conditions.

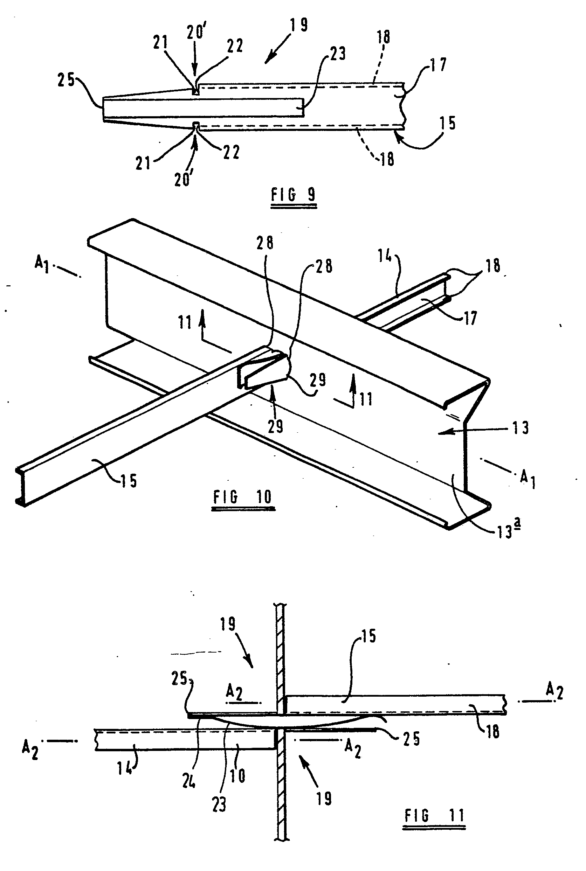

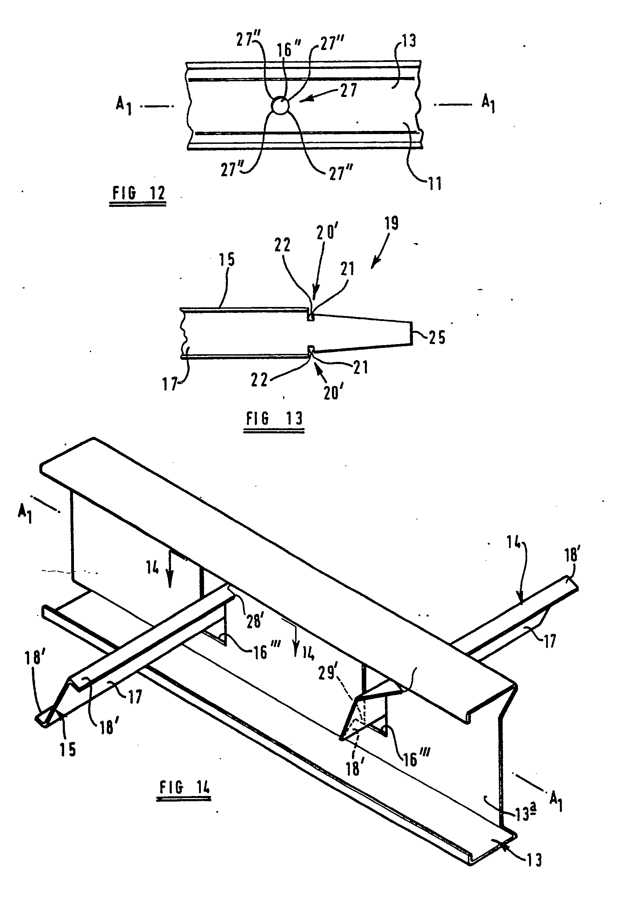

Referring now to Figures 10—13, again the same reference numerals have been used to refer to parts corresponding to those illustrated in Figures 2—5.

In this embodiment again the majority of the arrangement is as described in connection with the first embodiment except for the following.

The aperture 16'' is circular. The end part 19 of each restraint tie 14, 15 is as described in connection with the second embodiment illustrated in Figure 6—9 except that in this embodiment, only the restraint tie 14 is provided with the leaf spring 23 instead of both the restraint ties 14, 15.

The manner of use is as described in connection with the second embodiment and it will be seen that it is portions 27'' of the wall part 27 surrounding the circular aperture 16'' that are received within the slots 20'. Again, the abutments 21, 22 engage opposite surfaces of the wall part 27 at positions 28, 29 which are spaced laterally of the axis $A_1$ with at least the abutments which engage at 29 spaced from axis $A_1$ towards the support member of which the purlins 13 are supported. Thus once again the ties 14, 15 restrain rotation of the purlin 13 about the axis $A_1$ or an axis parallel thereto and reduce the risk of buckling of purlin 13 in high wind conditions.

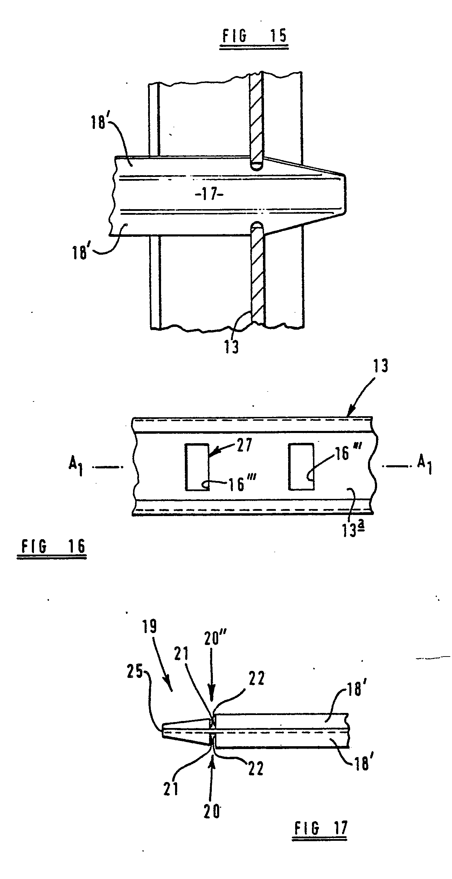

Referring now to Figures 14—17, again the same reference numerals have been used to refer to parts corresponding to those illustrated in Figures 2—5.

In this embodiment the arrangement is again generally similar to that of Figures 2—9 with the following differences.

In this embodiment, the purlin 13 has a separate aperture 16''' for each restraint tie 14, 15, which aperture 16''' is of rectangular configuration with the major axis of the rectangle lying transverse to the axis $A_1$ of the purlin 13.

Each restraint tie 14, 15 is of generally S or Z configuration comprising a web 17 having at opposite transverse ends thereof oppositely directed flanges 18'.

Each flange 18' is provided with a slot 20'' providing opposed abutments 21, 22 which are spaced apart longitudinally of the axis $A_2$ of the tie 14, 15.

In use, a restraint tie 14 or 15 is introduced into its associated aperture 16''' with the plane of the web 17 lying parallel to the major axis of the aperture. When the restraint tie 14, 15 has been inserted until the slots 20'' are aligned with the wall part 27 surrounding the aperture 16''', the restraint tie is rotated about its longitudinal axis $A_2$ to cause the wall part 27 to enter the slots 20'' so that the abutments 21, 22 provided by the edges of the slots 20'' engage oppositely facing surfaces of the wall part 27. A similar procedure is followed for the other restraint tie 15 or 14 respectively, except that the other tie 15, 14 is introduced into a separate aperture 16''' and from the opposite direction. As in the case of the previously described embodiments, the abutments 21, 22 engage oppositely directed faces of the wall part 27 at positions 28', 29' which are spaced apart transversely of the axis $A_1$ of the purlin 13 and thus restrain the purlin 13 from rotation.

If desired, the restraint ties 14, 15 shown in Figures 1 to 13 may be used each with a separate aperture for each end 19 thereof, i.e. in a similar manner to the restraint ties 14, 15 of Figures 14 to 17 and not with a pair of ties 14, 15 within one aperture. In this case, each tie 14, 15 would be provided with a leaf spring 23 which would act directly against an edge of the respective aperture.

The vertical positioning of the restraint ties 14, 15 on the purlin web 13a in each case is not necessarily on the centre line of the purlins 13 as shown in connection with all the previous embodiments. The ties 14, 15 may be inserted into the purlin web 13a either above or below the centre line provided that at least one abutment of each pair engages the web at positions spaced from the longitudinal axis of the purlin towards the support members.

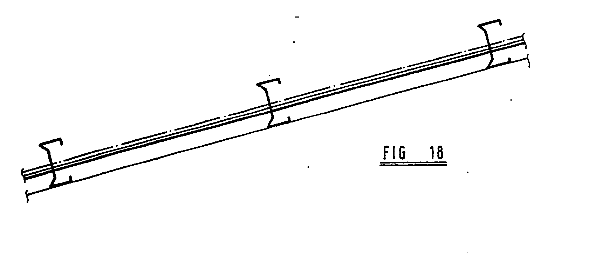

Of course, the opposite ends of each restraint tie 14, 15 described are similarly received in further apertures in further purlins. Again, one abutment of each pair at the other end is spaced from the longitudinal axis of the purlin towards the support members. The ties 14, 15 may be inclined so as to fix to the purlins 13 in the manner shown in Figure 18 where the end connection is not dependent upon mutual interaction of the restraint ties 14, 15.

If desired, the purlins 13 or other structural members may be of other shape than the sigma shape described hereinbefore, for example channel shape and the apertures for the ties 14, 15 being provided in the webs thereof.

Of course, in all the embodiments, the restraint ties 14, 15 also maintain a purlin 13 parallel to an adjacent purlin 13 as a result of engagement of the abutments 21, 22 with both the purlins 13 as described hereinbefore.

Although the cases of roof cladding structures have been described hereinbefore, the restraint ties 14, 15 may be utilised for other cladding purposes, for example to restrain structural members comprising horizontal rails in a vertical wall cladding construction, and hold the rails parallel to one another.

## Claims

1. A building cladding construction including a plurality of spaced apart elongate support members (10), a plurality of elongate structural members (13) each having a longitudinal axis ($A_1$), supported by the support members (10) in side-by-side parallel, spaced relation and extending transversely of the support members (10) to span the spaces between adjacent support members (10), and at least one restraint tie (14, 15) associated therewith, and extending between each pair of adjacent structural members (13), the or each tie (14, 15) comprising an elongated body having a longitudinal axis ($A_2$), a web (17), and an outwardly extending limb (18, 18') at each longitudinal edge of the web (17), each end part (19) of the body having first and second pairs of abutments (21, 22), the abutments of each pair being spaced apart longitudinally of said axis ($A_2$) of the restraint tie (14, 15), the abutments (21, 22) comprising the edges of slots (20, 20', 20'') formed in said limbs (18, 18') and/or the web (17), each of the structural members (13) of said pair of structural members having at least one aperture (16, 16', 16'', 16''') therein, the abutments of said first and second pairs of abutments (21, 22) of each end part (19) engaging opposite faces of a wall (27) of the associated structural member (13) around said aperture (16, 16', 16'', 16'''), characterised in that the or each aperture (16, 16', 16'', 16''') receives one of said end parts (19) of the restraint tie (14, 15) with the web (17) of the restraint tie extending transversely of the longitudinal axis ($A_1$) of the structural member (13), so that the abutments (21, 22) of the first pair are spaced apart from the abutments (21, 22) of the second pair in a direction transverse to the longitudinal axes ($A_1$) of the structural members (13), with at least one pair of abutments (21, 22) being spaced from the longitudinal axis ($A_1$) of the structural member (13) in a direction towards the nearest support member (10) so that each of the structural members (13) are restrained against rotation about an axis coincident with or parallel to the longitudinal axis ($A_1$) thereof, and the adjacent structural members are held in parallel relation.

2. A building cladding construction according to Claim 1 characterised in that at least some end parts (19) of some restraint ties (14, 15) have a resilient means (23) associated therewith to retain said abutments (21, 22) in engagement with said faces (27) of the structural member (13).

3. A building cladding construction according to Claim 1 or Claim 2 characterised in that the end parts (19) of two restraint ties (14, 15) are engaged within one aperture (16, 16', 16'') of one of said pairs of structural members (13), the restraint ties (14, 15) extending from the aperture (16, 16', 16'') in opposite directions, one of the ties (14) restraining the other of said pair of structural members (13) whilst the other (15) of said two ties extends to and restrains a further structural member (13).

4. A building cladding construction according to any one of the preceding claims characterised in that the body of the or each restraint tie (14, 15) comprises a generally channel section member having a pair of spaced parallel limbs (18) interconnected by said web (17), the abutments (21, 22) being provided by the edges of slots (20) formed in each of said limbs (18), the edges of the slots overlying a portion of the wall adjacent said aperture and the aperture (16) being of rectangular configuration.

5. A building cladding construction according to any one of Claims 1 to 3 characterised in that the body of the or each restraint tie (14, 15) comprises a generally channel section member having a pair of spaced parallel limbs (18) interconnected by said web (17), the abutments (21, 22) being provided by the edges of slots (20') formed in the web (17) of the channel (14, 15), said limbs (18) terminating in alignment with the edge (22) of the slot (20') furthest from the free end (25).

6. A building cladding construction according to Claim 5 characterised in that the aperture (16', 16'') is of cruciform configuration or circular to permit of the end part (19) being inserted into the aperture (16', 16'') when aligned with a part of the aperture (16', 16'') of maximum cross-sectional dimension, and to permit said slots (20') to engage opposite surfaces of the wall (27) around the aperture (16', 16'') when the end part is displaced towards a part of minimum horizontal cross-sectional dimension where the aperture (16') is of cruciform configuration, or from a diametric position so as to extend chordally of the aperture (16') where the aperture (16') is circular.

7. A building cladding construction according to any one of Claims 1 to 3 characterised in that the body of the or each restraint tie (14, 15) comprises a web (17) and at opposite ends thereof oppositely directed flanges (18') so as to provide a generally S or Z shape.

8. A building cladding construction according to Claim 7 characterised in that the abutments (21, 22) of the or each restraint tie (14, 15) are provided by slots (20'') formed in said flanges (18') and the apertures (16''') in the structural members (13) are of generally rectangular configuration so as to permit of the end part (19) being engaged within the aperture (16''') by orientating the end part (19) so that the web (17) lies generally parallel to the longer sides of the rectangle, and thereafter the end part (19) is rotated about the longitudinal axis (A₂) of the restraint tie (14, 15) so as to cause portions of the wall (27) around said aperture (16''') to engage within the slots (20''') so that oppositely directed surfaces of said wall parts abut the edges of the slots (20''') which provide said abutments (21, 22).

9. A building cladding construction according to Claim 8 characterised in that the flanges (18') decrease in height towards the free end (25) of the end part (19) from a maximum height at said slot (20''').

**Patentansprüche**

1. Gebäudehüllaufbau aufweisend eine Mehrzahl von voneinander beabstandeten langgestreckten Stützelementen (10), eine Mehrzahl von langgestreckten Stützelementen (13), die jeweils eine Längsachse (A₁) besitzen, abgestützt durch die Stützelemente (10) in einer parallelen, Seitean-Seite und beabstandeten Beziehung, und sich erstreckend quer zu den Stützelementen (10), um die Abstände zwischen benachbarten Stützelementen (10) zu überspannen, und mit mindestens einem Halterungsband (14, 15), das diesen zugeordnet ist und sich zwischen jedem Paar von benachbarten Strukturelementen (13) erstreckt, wobei das oder jedes Band (14, 15) einen langgestreckten Körper aufweist, der eine Längsachse (A₂) besitzt, weiter aufweist eine Verstärkung (17) und einen sich nach außen erstreckenden Rand (18, 18') an jeder Längsecke der Verstärkung (17), wobei jeder Endteil (19) des Körpers erste und zweite Paare von Stoßflächen (21, 22) besitzt und die Stoßflächen jedes Paares über die Länge der Achse (A₂) des Halterungsbandes (14, 15) beabstandet sind, wobei weiter die Stoßflächen (21, 22) Ecken oder Schlitze (20, 20', 20'') aufweisen, die in den Rändern (18, 18') und/oder der Verstärkung (17) ausgebildet sind, wobei des weiteren jedes der Strukturelemente (13) des Paares von Strukturelementen zumindest eine Öffnung (16, 16', 16'', 16''') aufweist und die Stoßflächen des ersten und zweiten Paares von Stoßflächen (21, 22) jedes Endteiles (19) gegenüberliegende Flächen einer Wand (27) des zugeordneten Strukturelementes (13) um die Öffnung (16, 16', 16'', 16''') erfassen, dadurch gekennzeichnet, daß die oder jede Öffnung (16, 16', 16'', 16''') einen der Endteile (19) des Halterungsbandes (14, 15) aufnimmt, mit der Verstärkung (17) des Halterungsbandes sich erstreckend quer zu der Längsachse (A₁) des Strukturelementes (13), das zumindest ein Paar der Stoßflächen (21, 22) von der Längsachse (A₁) des Strukturelementes (13) in einer Richtung zu dem nächst kommenden Stützelement (10) beabstandet ist, so daß jedes der Strukturelemente (13) gegen eine Verdrehung um eine Achse, die mit der Längsachse (A₁) zusammenfällt oder zu dieser parallel ist, gehaltert ist, und daß die benachbarten Strukturelemente in einer parallelen Beziehung gehalten sind.

2. Gebäudehüllaufbau nach Anspruch 1, dadurch gekennzeichnet, daß zumindest einige Endteile (19) von einigen Halterungsbändern (14, 15) nachgiebige Mittel (23) besitzen, die diesen zugeordnet sind, um die Stoßflächen (21, 22) in Zusammenwirkung mit den Flächen (27) des Strukturelementes (13) zu halten.

3. Gebäudehüllaufbau nach Anspruch 1 oder 2, dadurch gekennzeichnet, daß die Endteile (19) von zwei Halterungsbändern (14, 15) in einer Öffnung (16, 16', 16'') eines der Paare von Strukturelementen (13) gefaßt sind, daß die Halterungsbänder (14, 15) sich von der Öffnung (16, 16', 16'') in entgegengesetzte Richtungen erstrecken, wobei eines der Bänder (14) das andere des Paares von Strukturelementen (13) zurückhält, während das andere (15) der zwei Bänder sich zu einem weiteren Strukturelement (13) erstreckt und dieses haltert bzw. zurückhält.

4. Gebäudehüllaufbau nach einem der vorstehenden Ansprüche, dadurch gekennzeichnet, daß der Körper des oder jedes Halterungsbandes (14, 15) einen im wesentlichen kanalartigen Abschnittsteil aufweist, der ein Paar von beabstandeten parallelen Rändern (18) besitzt, die mit der Verstärkung (17) verbunden sind, daß die Stoßflächen (21, 22) durch Ecken von Schlitzen (20) vorgesehen sind, die in jedem der Ränder (18) ausgebildet sind, daß die Ecken der Schlitze einen Bereich der Wand angrenzend zu der Öffnung überlappen und daß die Öffnung (16) eine rechtwinklige Gestalt besitzt.

5. Gebäudehüllaufbau nach einem der Ansprüche 1 bis 3, dadurch gekennzeichnet, daß der Körper des oder jedes Halterungsbandes (14, 15) einen im wesentlichen kanalartigen Abschnittsteil aufweist, der ein Paar von parallel beabstandeten Rändern (18) besitzt, die durch die Verstärkung (17) untereinander verbunden sind, daß die Stoßflächen (21, 22) durch Ecken von Schlitzen (20') vorgesehen sind, die in der Verstärkung (17) des Kanals (14, 15) ausgebildet sind und daß die Ränder (18) enden in Übereinstimmung mit der Ecke (22) des Schlitzes (20'), der sich am weitesten von dem freien Ende (25) entfernt befindet.

6. Gebäudehüllaufbau nach Anspruch 5, dadurch gekennzeichnet, daß die Öffnung (16', 16'') eine kreuzförmige Gestaltung besitzt oder kreisförmig ist, um zu ermöglichen, daß ein Endteil (19) in die Öffnung (16', 16'') eingeführt wird, wenn er mit einem Teil der Öffnung (16', 16'') von maximalen Querschnittsabmessungen ausgerichtet ist, und um zu ermöglichen, daß die Schlitze (20') mit entgegengesetzten Flächen der Wand (27) um die Öffnung (16', 16'') herum zusammenwirken, wenn das Enteil versetzt ist zu einem Teil hin von minimalen horizontalen Querschnittsabmessungen, wenn die Öffnung (16') kreuzförmige Ausgestaltung hat, oder eine diametrale Stellung, um sich sehnenartig zu der Öffnung (16') zu erstrecken, wenn die Öffnung (16') kreisförmig ist.

7. Gebäudehüllaufbau nach einem der Ansprüche 1 bis 3, dadurch gekennzeichnet, daß der Körper des oder jedes Halterungsbandes (14, 15) eine Verstärkung (17) aufweist und an gegenüberliegenden Enden derselben entgegengesetzt gerichtete Flansche (18'), um so eine im wesentlichen S- oder Z-förmige Gestalt zu ergeben.

8. Gebäudehüllaufbau nach Anspruch 7, dadurch gekennzeichnet, daß die Stoßflächen (21, 22) des oder jedes Rückhaltebandes (14, 15) durch Schlitze (20'') vorgesehen sind, die in den Flanschen (18') ausgebildet sind, und daß die Öffnungen (16''') in den Strukturelementen (13) von im wesentlichen rechtwinkliger Gestalt sind, um es so zu ermöglichen, daß der Endteil (19) in der Öffnung (16''') erfaßt wird, durch eine Ausrichtung des Endteils (19) so, daß die Verstärkung (17) im wesentlichen parallel zu den längeren Seiten des Rechtecks liegt, und daß danach das Endteil (19) um die Längsachse (A₂) des Rückhaltebands (14, 15) gedreht ist, um so zu bewirken, daß die Bereiche der Wand (27) um die Öffnung (16''') herum in den Schlitzen (20''') erfaßt sind, so daß entgegengesetzt gerichtete Flächen der Wandbereiche gegen die Ecken der Schlitze (20''') stoßen, die die Stoßfläche (21, 22) ergeben.

9. Gebäudehüllaufbau nach Anspruch 8, dadurch gekennzeichnet, daß die Flansche (18') in der Höhe zu dem freien Ende (25) des Endteils (19) hin abnehmt, von einer maximalen Höhe bei dem Schlitz (20''').

**Revendications**

1. Superstructure pour bardage comprenant plusieurs éléments porteurs allongés et espacés (10), plusieurs éléments structurels allongés (13) qui comportent chacun un axe longitudinal (A₁), qui sont supportés côte à côte par les éléments porteurs (10) de manière parallèle et espacée et qui s'étendent transversalement aux éléments porteurs (10) pour chevaucher les espaces existant entre des éléments porteurs adjacents (10), et au moins un tirant de renfort (14, 15) qui est associé à ces éléments et qui s'étend entre chaque paire d'éléments structurels (13) adjacents, le ou les tirants (14, 15) comportant un corps allongé possédant un axe longitudinal (A₂), un âme (17), et une aile s'étendant vers l'extérieur (18, 18') prévue sur chaque bord longitudinal de l'âme (17), chaque partie extrême (19) du corps présentant une première et une seconde paire de butées (21, 22), les butées de chaque paire étant espacées longitudinalement dudit axe (A₂) du tirant de renfort (14, 15), les butées (21, 22) comprenant les bords d'encoches (20, 20', 20'') pratiquées dans lesdites ailes (18, 18') et/ou l'âme (17), chacun des éléments structurels (13) de ladite paire d'éléments structurels comportant au moins une ouverture (16, 16', 16'', 16'''), les butées desdites première et seconde paires de butées (21, 22) de chaque partie extrême (19) s'engageant autour de ladite ouverture (16, 16', 16'', 16''') dans des faces opposées d'une paroi (27) de l'élément structurel correspondant (13), caractérisée en ce que la ou les ouvertures (16, 16', 16'', 16''') reçoivent l'une desdites parties extrêmes (19) du tirant de renfort (14, 15), l'âme (17) du tirant de renfort s'étendant transversalement à l'axe longitudinal (A₁) de l'élément structurel (13), de manière que les butées (21, 22) de la première paire soient espacées des butées (21, 22) de la seconde paire transversalement aux axes longitudinaux (A₁) des éléments structurels (13), au moins une paire de butées (21, 22) étant espacée de l'axe longitudinal (A₁) de l'élément structurel (13) en direction de l'élément porteur le plus proche (10), de manière que chacun des éléments porteurs (10) soit immobilisé en rotation autour d'un axe coïncidant avec ou parallèle à son axe longitudinal (A₁), et que les éléments structurels adjacents soient maintenus parallèles les uns aux autres.

2. Superstructure pour bardage conforme à la revendication 1, caractérisée en ce qu'au moins certaines parties extrêmes (19) de certains tirants de renfort (14, 15) sont munies d'un moyen élastique propre (23) pour maintenir l'enclenchement desdites butées (21, 22) avec lesdites surfaces (27) de l'élément structurel (13).

3. Superstructure pour bardage conforme à la revendication 1 ou 2, caractérisée en ce que les parties extrêmes (19) de deux tirants de renfort (14, 15) sont être engagées dans une ouverture (16, 16', 16'') de l'une desdites paires d'éléments structurels (13), les tirants de renfort (14, 15) s'étendant depuis l'ouverture (16, 16', 16'') dans des directions opposées, l'un des tirants (14) retenant l'autre paire desdits éléments structurels (13), tandis que le second (15) desdits deux tirants s'étend vers un autre élément structurel et le retient (13).

4. Superstructure pour bardage conforme à l'une quelconque des revendications précédentes, caractérisée en ce que le corps du ou des tirants de renfort (14, 15) est constitué d'un élément à section générale en U comportant une paire d'ailes parallèles espacées (18) qui sont réunies par ladite âme (17), les butées (21, 22) étant constituées par les bords d'encoches (20) pratiquées dans chacune desdites ailes (18), les bords des encoches recouvrant une partie de la paroi adjacente à ladite ouverture et l'ouverture (16) étant de forme rectangulaire.

5. Superstructure pour bardage conforme à l'une quelconque des revendications 1 à 3, caractérisée en ce que le corps du ou des tirants de renfort (14, 15) est constitué d'un élément à section générale en U comprenant une paire d'ailes parallèles espacées (18) réunies par ladite âme (17), les butées (21, 22) étant constituées par les bords d'encoches (20') pratiquées dans l'âme (17) de l'élément en U (14, 15), lesdites ailes (18) étant alignées avec le bord (22) de l'encoche (20') le plus éloigné de l'extrémité libre (25).

6. Superstructure pour bardage conforme à la revendication 5, caractérisée en ce que l'ouverture (16', 16'') est cruciforme ou circulaire pour permettre d'y introduire la partie extrême (19) lorsqu'elle est alignée avec une partie de l'ouverture (16', 16'') de section maximum, et pour permettre auxdites encoches (20') de s'engager dans des surfaces opposées de la paroi (27) autour de l'ouverture (16', 16'') lorsque la partie extrême est déplacée vers une partie présentant une dimension transversale horizontale minimum quand l'ouverture (16') est cruciforme, ou depuis une position diamétrale de façon à s'étendre à la manière d'une corde par rapport à l'ouverture (16') quand l'ouverture (16') est circulaire.

7. Superstructure pour bardage conforme à l'une quelconque des revendications 1 à 3, caractérisée en ce que le corps du ou des tirants de renfort (14, 15) comprend une âme (17) et des semelles (18'), dirigées en sens opposé, prévues sur les extrémités opposées de ladite âme (17), pour obtenir une forme générale en S ou en Z.

8. Superstructure pour bardage conforme à la revendication 7, caractérisée en ce que les butées (21, 22) du ou des tirants de renfort (14, 15) sont constituées par des encoches (20'') pratiquées dans lesdites semelles (18') et les ouvertures (16''') ménagées dans les éléments structurels (13) sont de forme sensiblement rectangulaire pour permettre d'engager la partie extrême (19) dans l'ouverture (16''') en l'orientant de manière que l'âme (17) soit sensiblement parallèle aux côtés les plus longs du rectangle, puis en faisant tourner la partie extrême (19) autour de l'axe longitudinal (A₂) du tirant de renfort (14, 15) pour que des parties de la paroi (27) autour de ladite ouverture (16''') s'engagent dans les encoches (20'''), de manière que des surfaces dirigées en sens opposé desdites parties de paroi soient en appui contre les bords des encoches (20''') constituant lesdites butées (21, 22).

9. Superstructure pour bardage conforme à la revendication 8, caractérisée en ce que la hauteur des semelles (18') décroît en direction de l'extrémité libre (25) de la partie extrême (19), leur hauteur maximum se situant au niveau de ladite encoche (20''').

FIG 1

FIG 2

# 0 104 271

FIG 3

FIG 4

FIG 5

FIG 6

FIG 7

FIG 8

FIG 9

FIG 10

FIG 11

# 0 104 271

FIG 12

FIG 13

FIG 14

5

FIG  15

18'

-17-

18'

13

13

27

$A_1$

16'''

16''

$A_1$

13ª

FIG  16

19

25

21

20''

22

18'

22

18'

21

20

FIG  17

FIG 18